(19) Europäisches Patentamt
European Patent Office
Office européen des brevets

(11) Numéro de publication : **0 245 144 B1**

# (12) FASCICULE DE BREVET EUROPEEN

(45) Date de publication du fascicule du brevet : **13.03.91 Bulletin 91/11**

(51) Int. Cl.$^5$ : **C08J 3/11**, C08J 3/14, C08L 27/12, H01M 6/16

(21) Numéro de dépôt : **87400905.3**

(22) Date de dépôt : **17.04.87**

## (54) Procédé de fabrication de colloides ionomères perfluorés conducteurs cationiques et le utilisation des colloides obtenus.

(30) Priorité : **22.04.86 FR 8605792**

(43) Date de publication de la demande : **11.11.87 Bulletin 87/46**

(45) Mention de la délivrance du brevet : **13.03.91 Bulletin 91/11**

(84) Etats contractants désignés : **CH DE FR GB LI**

(56) Documents cités :
**EP-A- 0 050 447**
**EP-A- 0 066 369**
**GB-A- 2 014 585**
**US-A- 4 540 716**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**
**CH DE FR GB LI**
Titulaire : **CENTRE NATIONAL DE LA RECHERCHE SCIENTIFIQUE**
**15, quai Anatole France**
**F-75007 Paris (FR)**
**CH DE FR GB LI**

(72) Inventeur : **Aldebert, Pierre**
**60, rue de l'Isle**
**F-38340 Voreppe (FR)**
Inventeur : **Pineri, Michel**
**Chemin de la Croix Verte**
**F-38330 Montbonnot (FR)**

(74) Mandataire : **Mongrédien, André et al**
**c/o BREVATOME 25, rue de Ponthieu**
**F-75008 Paris (FR)**

EP 0 245 144 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de fabrication de colloïdes d'ionomères perfluorés conducteurs cationiques et les colloïdes obtenus par ce procédé. Ces colloïdes constituent des électrolytes plus ou moins solides qui peuvent être utilisés dans différents systèmes électrochimiques et principalement dans des cellules d'affichage électrochrome et dans des générateurs électro-chimiques, communément appelés batteries, fonctionnant à température ambiante.

Les colloïdes selon l'invention peuvent présenter suivant les proportions relatives des phases dispersée et dispersive une structure de liquide figé allant du sol au gel. Un gel est un colloïde homogène totalement translucide sans faille ni craquelure qui peut être découpé sous forme de cubes comme de la gélatine.

On connaît actuellement différents procédés relatifs à la mise en solution directe de polymères comportant un squelette carboné perfluoré le long duquel se trouvent statistiquement rattachées en faible proportion des chaînes latérales, relativement courtes, possédant à leur extrémité un groupement échangeur de cations. Ces groupements échangeurs d'ions sont du type $-SO_3M$ ou $-CO_2M$ où M est un proton, un cation métallique ou une entité cationique beaucoup plus complexe. Ces matériaux entrent dans la catégorie des ionomères.

Un ionomère perfluoré est défini par sa masse équivalente, correspondant à la masse moléculaire de l'ionomère à laquelle correspond une charge unitaire échangeable, ou par sa capacité d'échange cationique exprimée en milliéquivalent par gramme.

Si la mise en solution des ionomères perfluorés à groupements sulfoniques de faibles masses équivalentes (inférieur à 1000) est connue depuis longtemps, (voir document FR-A-2 024 289 de novembre 1969) la mise en solution relative à des ionomères perfluorés de masses équivalentes plus élevées (supérieur à 1000) est beaucoup plus récente. Cette dernière a notamment fait l'objet des brevets ou demandes de brevets EP-A-0 066 369, EP-A-0 079 218, US-A-4 421 579 et US-A-4 386 987.

Parallèlement, on a cherché à mettre en solution des ionomères perfluorés à groupements carboxyliques, comme le montre les références FR-A-2 416 904 et EP-A-0 050 447.

La première technique connue pour mettre en solution un ionomère perfluoré à groupements sulfoniques, de masse équivalente élevée, consiste à chauffer l'ionomère dans un solvant ou mélange de solvants, sous azote à pression atmosphérique, jusqu'à une température de 250°C (voir US-4 421 579, US-4 386 987). Les solvants utilisés sont principalement des amides.

La seconde technique utilisée pour mettre en solution un ionomère perfluoré à groupements sulfoniques, de masse équivalente élevée, consiste à dissoudre cet ionomère dans un mélange eau/alcool, porté à une température de 210 à 250°C pendant quelques heures (voir EP-A-0 066 369).

La technique utilisée pour mettre en solution un ionomère perfluoré à groupements carboxyliques, consiste à dissoudre l'ionomère dans un solvant hydrophile polaire contenant un peu d'eau (0,001 à 30% en poids) porté à une température de 20 à 250°C (voir EP-A-0 050 447).

Les différents procédés de mise en solution des ionomères perfluorés de poids équivalents élevés ont pour but la reconstitution de membranes échangeuses de cations. Les parties reconstituées de ces membranes possèdent autant que possible toutes les caractéristiques (tenue mécanique, résistance chimique, capacité d'échange, et perm-sélectivité) des membranes initiales.

L'utilisation privilégiée de ces membranes ionomères perfluorées sulfoniques ou carboxyliques est le procédé de fabrication "chlore-soude". Compte tenu du prix relativement élevé de ces membranes, il s'avère économiquement rentable de les réparer, lorsque des défauts apparaissent prématurément en cours de fonctionnement tels que des fissures ou des trous.

La solution d'ionomères perfluorés, résultant de la mise en solution directe des ionomères dans un solvant, permet alors le colmatage de ces défauts, après élimination du solvant.

Dans l'état de la technique actuellement connu, on ne s'intéresse pas aux compositions liquides obtenues, en tant que matériau, ce qui est tout à fait logique étant donné que la finalité de tous les procédés antérieurs est d'aboutir à un matériau solide plus ou moins complexe dont le solvant a été chassé.

De ce fait, les procédés de mise en solution actuellement connus de l'art antérieur ne permettent pas d'aboutir à la fabrication d'un sol visqueux ou d'un gel homogène dont la composition est parfaitement connue et peut être systématiquement reproduite, surtout si la concentration en ionomère est élevée (généralement au-dessus de 20% en poids d'ionomère) et le ou les solvants peu volatils.

L'invention s'intéresse à la fabrication de colloïdes, c'est-à-dire de sols homogènes plus ou moins visqueux allant jusqu'à des gels de nature physique dont la transition sol-gel est généralement réversible, d'ionomères perfluorés et à l'utilisation en tant que tels de ces matériaux.

L'invention s'intéresse plus particulièrement aux propriétés de conduction cationique de ces colloïdes d'ionomères perfluorés en vue de leur incorporation directe dans des dispositifs électrochimiques tels que des cellules d'affichage électrochrome ou des batteries.

De façon plus précise, l'invention a pour objet un procédé de fabrication d'un colloïde d'au moins un ionomère perfluoré conducteur cationique, caractérisé en ce qu'il comprend les étapes suivantes :

- mise en solution d'au plus 15% en poids de l'ionomère dans un mélange eau/alcool à une température allant de 210°C jusqu'à moins de 300°C et en autoclave, cet ionomère ayant une masse équivalente inférieure à 1500 et l'alcool ayant jusqu'à 10 atomes de carbon,
- concentration et séchage de la solution à température au plus égale à 100°C,
- broyage du produit obtenu pour former une poudre fine,
- dissolution et homogénéisation de cette poudre dans un solvant contenant au moins un solvant organique, à température au plus égale à 100°C.

Les inventeurs ont trouvé que la mise en solution d'un ionomère perfluoré dans un mélange eau/alcool entraîne une modification structurale de cet ionomère permettant, après séchage puis broyage du produit obtenu, l'obtention d'une poudre fine qui peut être dissoute à basse température dans un grand nombre de solvants organiques ou mélange de solvants généralement polaires.

L'utilisation selon l'invention d'une première étape de mise en solution d'un ionomère perfluoré dans un mélange eau/alcool permet d'obtenir, après concentration et séchage, des produits ayant les mêmes caractéristiques chimiques que celles de l'ionomère de départ notamment en ce qui concerne la capacité d'échange des cations.

En revanche, comme le notent les auteurs eux-mêmes du document EP-A 0 066 369, les films reconstitués directement à partir de ces solutions n'ont pas les mêmes caractéristiques mécaniques que la membrane de départ, donc pas la même structure.

La formation d'une poudre selon l'invention permet une dissolution à température ambiante ou plus élevée, mais inférieure ou égale à 100°C, dans un grand nombre de solvants généralement polaires, et en particulier des solvants dans lesquels la dissolution directe de l'ionomère initial, même dans des conditions dures (températures élevées pendant de longues durées) est soit impossible, soit très faible ou encore conduit à des dégradations chimiques de l'ionomère et des solvants.

Les inventeurs ont trouvé que la méthode connue de dissolution directe d'un ionomère perfluoré sulfonique de masse équivalente élevée dans un certain nombre de solvants généralement polaires, sous pression atmosphérique d'azote et à une température maximale de 250°C, conduit à des résultats très différents de ceux obtenus par la méthode de mise en solution dans un mélange eau/alcool, en autoclave.

Ainsi, pour de nombreux solvants, la dissolution de l'ionomère perfluoré sulfonique est partielle à la température de reflux, et ce, quelle que soit la durée de l'expérience et des proportions relatives d'ionomère et de solvant. Ceci est notamment le cas avec le N-N-diméthylformamide (DMF, température d'ébullition 153°C) et le diméthylsulfoxyde (DMSO, température d'ébullition 189°C).

Dans cette dissolution partielle, on observe toujours au fond du récipient une partie gélatineuse, correspondant à de l'ionomère gonflé mais non dissous et une phase surnageante liquide généralement peu concentrée en ionomère et assez fortement colorée (jaune-orangée). La concentration par évaporation de la partie surnageante (à température ambiante ou par chauffage modéré inférieur à la température d'ébullition) conduit à un liquide de plus en plus visqueux puis à un gel très fortement coloré.

Ce mode opératoire présente des aléas ne permettant pas la fabrication d'un gel aux propriétés constantes: inhomogénéités semi-macroscopiques, passage mal défini du sol au gel dans une gamme de teneurs en ionomère très étendue, une dégradation chimique certaine que reflète cependant mal la mesure de la capacité d'échange cationique (C.E.C).

En effet, la membrane reconstituée après évaporation totale du solvant, quoique très fortement colorée, présente des propriétés mécaniques avec une CEC pratiquement inchangée par rapport à la membrane initiale, et tout comme cette dernière, gonfle mais reste insoluble à température ambiante ou peu élevée dans les solvants polaires les plus courants, à la différence de la poudre obtenue conformément à l'invention.

La partie inférieure, ionomère gonflé non dissous, en quantité très importante par rapport à la phase surnageante est en outre difficilement récupérable en vue d'une utilisation ultérieure.

Pour d'autres solvants, les inventeurs ont observé que le phénomène de dissolution partielle de l'ionomère n'était pas le point le plus important mais plutôt l'aspect dégradation chimique de l'ionomère, ainsi que celui du solvant, au cours du chauffage. Ceci se traduit par un fort noircissement à la fois de l'ionomère gonflé non dissous et de la phase liquide surnageante. Ceci est en particulier le cas pour des solvants tels que le Sulfolane(R) (ou tétraméthylène sulfone de formule :

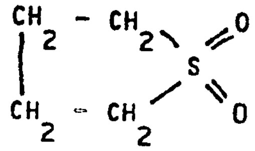

température d'ébullition 287°C) et le diéthylène glycol (ou 2,2'-oxydiéthanol, température d'ébulliton 245°C) décrits dans les brevets antérieurs. Il en est de même pour des solvants non décrits dans les brevets antérieurs, tel le carbonate de propylène glycol (ou carbonate de propylène CP de formule :

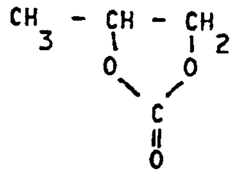

température d'ébulliton 240°C).

Afin d'empêcher toute dégradation de l'ionomère perfluoré, on effectue avantageusement la mise en solution dans un mélange eau/alcool(s) à une température allant de 210 à 250°C et par exemple égale à 250°C pendant 2 à 3 heures.

Le procédé de fabrication d'un colloïde selon l'invention s'applique avantageusement aux ionomères perfluorés comportant comme groupement échangeur de cations un groupement du type $-SO_3M$ ou $-CO_2M$ dans lequel M est un cation simple ou complexe.

Comme cations simples utilisables dans l'invention, on peut citer l'ion $H^+$, les ions des métaux alcalins, les ions des métaux alcalino-terreux et de façon moins restrictive de nombreux autres cations métalliques.

Comme cations complexes, on peut utiliser des ammonium quaternaires du type $HR_3N^+$ ou $R_4N^+$, où R représente l'hydrogène ou un radical alkyle, linéaire ou ramifié à 4 carbones au plus comme par exemple les radicaux méthyle, éthyle, propyle, butyle.

De façon avantageuse, M représente un cation d'un métal alcalin et en particulier l'ion $Li^+$.

Les ionomères perfluorés du type sulfonique ( $-SO_3{}^{-1}$) auxquels s'applique le procédé selon l'invention sont notamment ceux décrits dans la référence EP-A-0 066 369.

De même, les ionomères perfluorés du type carboxylique ( $-CO_2{}^{-1}$) sont notamment ceux décrits dans le document EP-A-0 050 447.

Le procédé selon l'invention s'applique à des ionomères perfluorés dont la masse équivalente est inférieure à 1500 suivant l'application électrochimique envisagée. Dans l'utilisation en tant qu'électrolyte des colloïdes obtenus selon l'invention, dans un générateur électrochimique, les ionomères utilisés présentent de préférence une masse équivalente allant de 900 à 1200 pour les ionomères sulfoniques.

Le mélange eau/alcool peut contenir de 20 à 90% en poids d'eau et de 10 à 80% en poids d'alcool dans le cas des ionomères perfluorés sulfoniques et encore moins d'eau dans le cas des ionomères carboxyliques, jusqu'à 0,001%. Il peut comporter un ou plusieurs alcools mélangés à l'eau.

Les alcools utilisables sont des alcanols ou des alcoxyalcools ayant jusqu'à 10 carbones. Ces alcools sont en particulier ceux décrits dans le document EP-A-0 066 369.

De préférence, on utilise comme mélange eau/alcool un mélange contenant 50% en volume d'eau et 50% en volume d'éthanol.

La quantité du ou des ionomères perfluorés mise dans la solution peut constituer jusqu'à 15% en poids de la solution, de préférence entre 5 et 10%, afin que la dissolution soit toujours complète.

L'étape de concentration et de séchage de la solution eau/alcool contenant le ou les ionomères perfluorés, après le chauffage en autoclave à une température inférieure à 300°C, peut entièrement être faite à température ambiante. Pour accélérer le processus, il est possible de chauffer progressivement en étuve la solution en évitant l'ébullition des constituants les plus volatils du mélange (diéthyléther, méthanol, éthanol,...) jusqu'à une température au plus égale à 100°C. La concentration et le séchage de la solution sont réalisés de façon homogène afin d'obtenir en fin de séchage des petits morceaux durs et cassants des ionomères perfluorés.

L'étape de concentration-séchage, dans le cas de colloïdes d'ionomères perfluorés (sols ou gels) avec des cations métalliques autres qu'alcalins ou alcalino-terreux, tels par exemple $Cu^{2+}$, $Fe^{2+}$, $Co^{2+}$, $Al^{3+}$, $Fe^{3+}$, $Ln^+$ (Lanthanides), $U^{4+}$, $Th^{4+}$ ou encore des cations complexes organiques ou organo-métalliques de grandes dimensions tels par exemple les ions alkylammonium, pyridinium à longues chaînes alkyles ($C_n$ $H_{2n+1}$ avec n

pouvant dépasser 18), métallicinium, peut s'accompagner d'une dialyse. Il suffit de placer le colloïde sous forme par exemple de $Li^+$ ou $Na^+$ dans une cellule de dialyse appropriée immergée dans une solution suffisamment concentrée, le plus souvent aqueuse, d'un sel du cation métallique, complexe organique ou complexe organo-métallique, puis d'éliminer l'excès de sel par plusieurs rinçages avec le solvant pur.

De façon avantageuse, le broyage des morceaux est effectué jusqu'à l'obtention d'une poudre ayant une granulométrie très basse et par exemple inférieure à 32 micromètres.

Le broyage de la poudre s'effectuant généralement à l'air, et donc en présence de l'humidité ambiante, on peut effectuer, avant la dissolution de cette poudre dans le solvant généralement polaire, un séchage de cette poudre à une température inférieure à 100°C et en particulier égale à 90°C afin d'éliminer la majeure partie de l'eau. Toutefois, selon la nature du solvant utilisé pour la dissolution ultérieure de la poudre et l'application électrochimique envisagée du sol ou gel obtenu, la déshydratation de la poudre doit pouvoir être plus poussée (élimination de l'eau de solvatation) nécessitant les opérations suivantes : déshydratation de la poudre pendant plusieurs heures ou jours sous vide à une température inférieure ou égale à 100°C, dissolution de la poudre ainsi séchée dans le solvant ou mélange de solvants généralement polaires anhydres et homogénéisation du colloïde obtenu sous atmosphère anhydre.

Comme on l'a dit précédemment, le procédé selon l'invention peut être utilisé avec un grand nombre de solvants polaires organiques, de façon avantageuse avec des solvants ayant une constante diélectrique supérieure à 30 et par ailleurs aptes à former des liaisons hydrogène. Cette valeur seuil de la constante diélectrique $\varepsilon$ peut toutefois être abaissée sensiblement jusqu'à 15 pour un solvant utilisé en mélange avec au moins un solvant ayant un $\varepsilon$ beaucoup plus élevé. Cependant, certains solvants très peu polaires comme le triéthylphosphate (TEP de formule $(C_2H_5)_3PO$ avec un $\varepsilon = 11$) ou le tributylphosphate (TBP de formule $(C_4H_9O)_3$ PO avec un $\varepsilon = 9$) peuvent être utilisés pour produire des solutions colloïdales selon le procédé de l'invention.

Les solvants organiques utilisables dans l'invention appartiennent à deux grandes familles : la première famille est celle des solvants dipolaires aprotiques où l'on trouve bon nombre des solvants couramment utilisés dans les générateurs électrochimiques ; ces solvants sont caractérisés par un fort moment dipolaire et une constante diélectrique moyenne ou élevée ($\varepsilon > 20$) et ne sont pas donneurs de protons. La seconde famille de solvants est celle des dipolaires protiques qui ont aussi un fort moment dipolaire mais qui, à la différence de la famille précédente, sont donneurs de protons en raison de leur fonction acide (acides vrais mais aussi alcools) et aptes à la formation de liaisons hydrogène.

Parmi les solvants appartenant à la première famille, il y a les amides, non substitués, N-monosubstitués et N-N-disubstitués, par exemple le formamide, l'acétamide, le N-méthyl formamide (NMF), le N-méthylacétamide (NMA), le N-méthylpropionamide, le N-butylacétamide, le N-N-diméthylformamide (DMF), le N-N-diéthylformamide, le N-N-dibutylformamide, le N-N-diméthylacétamide (DMA), le N-N-diéthylacétamide, le N-N-dipropylacétamide et, le N-N-diméthylpropionamide.

D'autres solvants de la première famille utilisables dans l'invention sont l'acétonitrile, le diméthylsulfoxyde (DMSO), le Sulfolane(R), le carbonate de propylène (CP), le carbonate d'éthylène glycol (CEG ou carbonate d'éthylène, température d'ébullition 243°C sous 740 mm) de formule :

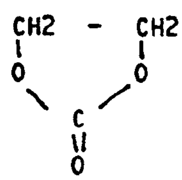

On peut encore citer des amides particuliers tels l'hexaméthylphosphoramide (HMPA de formule $((CH_3)_2N)_3PO$), l'hexaméthylphosphotriamide (HMPT de formule $((CH_3)_2N_3P)$ et des pyrrolidinones comme le 1-méthyl-2-pyrrolidinone.

Dans la deuxième famille de solvants utilisables dans l'invention, il y a principalement, les alcools ; des alcanols dont le nombre de carbones de la chaîne carbonée est inférieur à 10, des polyalcools tels que l'éthylène glycol, le propylène glycol, le diéthylène glycol, le glycérol, des éthers de ces polyalcools appartenant aux groupes des carbitols, glymes et cellosolves tel l'éthylène glycol monoéthyléther (ou éthylcellosolve ou 2-éthoxyéthanol $C_2H_5$ -O -$CH_2$ -$CH_2$ -OH).

Dans le cas particulier d'ionomères perfluorés de faible masse équivalente inférieure à 1000 dans le cas des sulfoniques, et à 600 dans le cas des carboxyliques, on peut utiliser d'autres solvants polaires comme les cétones et en particulier l'acétone.

Le solvant généralement polaire utilisé pour dissoudre la poudre peut être formé d'un des solvants cités ci-dessus ou d'un mélange de plusieurs de ces solvants.

En outre, il est possible d'ajouter au(x) solvant(s) organique(s) généralement polaire(s) utilisé(s) une quantité variable d'eau, dans une proportion allant de 0,001 à 30% en poids d'eau.

Outre l'intérêt du mélange de solvants dans des proportions déterminées pour l'obtention d'un colloïde homogène, sol ou gel, aux propriétés spécifiques, un mélange de solvants est parfois nécessaire simplement pour dissoudre la poudre. Par exemple pour certains solvants comme l'acétone, l'adjonction à la poudre d'une quantité variable d'eau de 0,001 à 30% en poids d'eau et en particulier de 0,05 à 20% en poids d'eau, est nécessaire.

Le mélange de solvants est également un procédé avantageux pour préparer un gel homogène à forte concentration, principalement au-dessus de 40% et surtout 50% en poids d'ionomère précisément connu, en évitant une longue et parfois problématique homogénéisation (dégradation chimique, concentration hétérogène du gel par évaporation du solvant). Dans ce cas, il faut ajouter au solvant désiré un autre solvant organique généralement polaire miscible, beaucoup plus volatil et ne formant pas d'azéotrope.

Les solvants comme par exemple l'acétone, le méthanol, ou encore le diéthyléther (avec $\varepsilon = 4,5$), l'acétonitrile répondent à ces critères pour la fabrication de gels d'ionomères perfluorés dans la plupart des solvants précédemment cités, tels que le carbonate de propylène CP, le CEG et le Sulfolane(R), dont la température d'ébullition est supérieure à 150°C et de préférence supérieure à 180°C.

Le gel homogène liquide résultant du mélange conduit au gel homogène très concentré désiré par évaporation totale du solvant volatil à température ambiante, en atmosphère sèche ou sous vide éventuellement.

Dans le cas particulier d'utilisation d'un colloïde d'au moins un ionomère perfluoré obtenu par le procédé selon l'invention comme électrolyte d'un générateur électrochimique, on peut avantageusement utiliser parmi les solvants dipolaires aprotiques, le carbonate de propylène ou le CEG précédemment cité.

Dans le cas de ces solvants en vue de la fabrication de gels très concentrés de composition connue et voulue en carbonate et en poudre dépassant 35% en poids d'ionomère, l'adjonction d'un solvant plus volatil totalement éliminable selon le procédé précédemment décrit, de façon avantageuse l'acétonitrile ou le diéthyléther, devient souhaitable voire nécessaire pour faire des gels homogènes qui atteignent et dépassent les 60% en poids d'ionomère. Dans le cas de ces très fortes concentrations en ionomère, la granulométrie est un paramètre essentiel ; des poudres tamisées très inférieures à 100 micromètres, par exemple 32 micromètres, sont souhaitables voire nécessaires.

Le procédé selon l'invention permet de dissoudre une grande quantité de poudre d'au moins un ionomère perfluoré dans un grand nombre de solvants généralement polaires, cette quantité pouvant atteindre et dépasser 60% en poids d'ionomère. Des solutions colloïdales homogènes aussi concentrées, obtention de gels en particulier, de concentrations voulues et connues en ionomères perfluorés, sont impossibles à obtenir sans dégradation chimique du ou des solvants et/ou du ou des ionomères perfluorés avec les procédés de dissolution directe décrits précédemment.

Le procédé de fabrication selon l'invention de colloïdes d'ionomères perfluorés permet d'obtenir des colloïdes conducteurs cationiques comprenant :

- 15 à 65% en poids d'au moins un ionomère perfluoré ayant une masse équivalente inférieure à 1500, et
- 85 à 35% en poids d'un solvant contenant au moins un solvant organique.

Ces colloïdes ont, à température ambiante, une conductivité cationique Ci élevée, supérieure à $10^{-4}\Omega^{-1}cm^{-1}$ et souvent $10^{-3}\Omega^{-1}cm^{-1}$, ce qui rend ces matériaux utilisables électrolytes dans des générateurs électrochimiques ou batteries.

Cette conductivité cationique élevée proche de celle d'un liquide permet l'utilisation de ces colloïdes en couches épaisses pour la fabrication de générateurs électrochimiques de capacité massique élevée et donc de forte capacité de stockage d'énergie.

La faible résistance électrique du colloïde obtenu par le procédé selon l'invention permet aussi son utilisation comme électrolyte en très faible épaisseur dans des cellules d'affichage électrochromes minces et transparentes, les parois des cellules étant des plaques de verre recouvertes selon des procédés connus d'un dépôt transparent de conducteurs électroniques adaptés, par exemple de l'ITO (oxyde d'indium et d'étain).

Le caractère novateur de ces électrolytes colloïdaux, sols et surtout gels, par rapport aux électrolytes plus conventionnels solides ou liquides pour l'application aux générateurs électrochimiques réside dans les points principaux suivants :

- le premier point spécifique aux colloïdes préparés selon le procédé de l'invention est que ceux-ci présentent une exceptionnelle inertie chimique en raison de leur squelette perfluoré vis-à-vis de la grande variété de matériaux entrant dans la constitution d'un générateur électrochimique (par exemple enveloppes, électrodes collectrices de diverses natures, séparateurs et composés électrochromes des cellules d'affichage),
- un second point est le fonctionnement à température ambiante des dispositifs électrochimiques,

– un troisième point toujours spécifique aux colloïdes de l'invention est que les ionomères perfluorés constitutifs du colloïde peuvent provenir des membranes endommagées, techniquement et/ou économiquement non réparables, suite à leur utilisation dans le procédé de fabrication dit "chlore-soude". L'invention dans ses applications apparaît ainsi comme un procédé de valorisation des matériaux déjà existants ne pouvant plus servir à leur utilisation première,

– un quatrième point spécifique aux gels en général, thermotropes en particulier, est le remplissage homogène de façon aisée du générateur électrochimique ou le dépôt homogène par simple étalement sur les plaques constituant le dispositif "sandwich" électrochrome mince, le colloïde participant à l'adhésion des deux plaques en regard, et ce, plus particulièrement dans le cas de l'invention où il s'agit d'une macromolécule organique. Le gel, intermédiaire entre un liquide et un solide, assure d'une part un contact intime aux interfaces solides diminuant par conséquent les résistances de contact et, d'autre part, rend moins cruciaux les problèmes d'étanchéité des dispositifs.

D'autres caractéristiques et avantages de l'invention ressortiront mieux de la description qui va suivre, donnée à titre illustratif et non limitatif en référence aux figures annexées dans lesquelles :

– la figure 1 représente schématiquement, en coupe longitudinale, un générateur électrochimique comportant comme électrolyte un colloïde selon l'invention,

– la figure 2 représente schématiquement, en coupe longitudinale, une cellule d'affichage électrochromique selon l'invention,

– les figures 3a et 3b sont des courbes de diffusion de neutrons aux petits angles (l'intensité I portée en ordonnée est une grandeur directement proportionnelle au nombre de neutrons diffusés par l'échantillon) en fonction du transfert de moment $Q = 4\pi \sin\theta/\lambda$ où $\lambda$ est la longueur d'onde des neutrons envoyés et $\theta$ l'angle d'observation : la figure 3a est relative à une membrane Nafion(R) de masse équivalente 1100, échangée $Li^+$ et séchée 48 h à 110°C, selon l'art antérieur, et la figure 3b est relative à une poudre de Nafion(R) de masse équivalente 1100 échangée $Li^+$ et séchée 48 h à 110°C, selon l'invention.

Le générateur électrochimique représenté sur la figure 1 comprend un récipient 1 étanche et isolant, notamment en polyéthylène, contenant un électrolyte 2. Cet électrolyte est un colloïde formé d'une poudre de Nafion(R) de masse équivalente 1100 échangé $Li^+$, dissoute dans du carbonate de propylène avec uune concentration de 32,6% en poids de Nafion ou dans du CEG avec une concentration de 29,6% en poids de Nafion.

Au contact de cet électrolyte, sont placés un premier conducteur de courant 3 recouvert d'une matière active positive 5 et un collecteur 7 en contact avec une matière active négative 9. Ces collecteurs 3 et 7 se présentent sous forme de grilles ou de plaques.

Le premier collecteur 3 constitué d'une électrode en acier est recouvert d'une couche à base de noir de carbone et de $V_2O_5$ finement divisé, de 0,5 mm d'épaisseur, constituant la matière active positive. Le second collecteur 7 en acier inoxydable est recouvert, par exemple par électrolyse, d'une couche 9 de lithium ou d'un alliage de lithium-aluminium jouant le rôle de la matière active négative.

Des séparateurs 11 et 13 peuvent être prévus pour éviter tout court-circuit. En particulier, le séparateur 11 est constitué de téflon microporeux et le séparateur 13 d'un tissu en fibres minérales ou organiques.

Plusieurs générateurs ou batteries électrochimiques unitaires peuvent être utilisés, reliés entre eux en série ou en parallèle.

Sur la figure 2, on a représenté en coupe une cellule d'affichage électrochrome selon l'invention. Cette cellule comprend un récipient isolant transparent 21 par exemple en verre dans lequel se trouve enfermée une électrode 23, appropriée à l'affichage, formée en particulier dans une couche d'ITO mince d'environ 10 nm. A la surface de cette couche d'ITO 23 se trouve une couche 24 électrochrome à base de $WO_3$ d'environ 0,5 m. Le récipient 21 renferme encore une contre-électrode 25 en ITO et un électrolyte 26 formé par exemple d'une poudre de Nafion(R) de masse équivalente 1100 échangé $Li^+$, dissoute dans un mélange d'acétonitrile et de carbonate de propylène avec une concentration de 37% en poids de Nafion.

Les conducteurs 27 et 28 permettent d'alimenter en courant électrique la cellule électrochrome et de faire varier le degré d'oxydation ou de réduction de la couche électrochrome en $WO_3$ afin d'en changer sa coloration.

La description ci-après se réfère à la fabrication d'un colloïde de Nafion(R), c'est-à-dire d'un ionomère perfluoré dont les chaînes pendantes se terminent par un groupement sulfonique.

A) - <u>Production d'une poudre de Nafion(R) de masse équivalente 1100,</u> à partir d'une membrane, commercialisée par Dupont de Nemours, sous la référence 117.

La membrane de Nafion(R) 117 est reçue sous forme acide. Cette membrane est placée tout d'abord dans une solution eau-éthanol (50-50 en volume) contenant un sel d'un métal alcalin tel que du chlorure de lithium, de sodium ou de rubidium, afin d'échanger totalement les ions $H^+$ par respectivement un ion $Li^+$, $Na^+$ ou $Rb^+$.

Après élimination, par rinçage à l'eau, de l'excès de sel, on place dans un récipient en pyrex une solution contenant 50% en volume d'eau bi-distillée et 50% en volume d'éthanol RP auxquels on ajoute 5 à 10% en poids de la membrane Nafion(R) échangée, découpée au préalable en petits morceaux. Le récipient est placé

dans un autoclave et chauffé, pendant 1 à 3 heures aux environs de 250°C.

On obtient alors une solution claire et limpide où l'ionomère perfluoré est totalement dissous. La solution obtenue est ensuite concentrée par chauffage progressif dans une étuve jusqu'à une température d'environ 90°C permettant ainsi d'éliminer successivement l'éther formé pendant la réaction de dissolution, puis l'éthanol résiduel et enfin l'eau.

La solution devient alors de plus en plus visqueuse et doit être fréquemment homogénéisée.

Aux alentours d'une concentration de 20% en poids de la solution on obtient, par refroidissement à la température ambiante, un gel élastique qui peut être découpé en petits cubes. Ce gel élastique est thermo-réversible, c'est-à-dire qu'il redevient liquide lorsqu'on le chauffe à une température de l'ordre de 80°C.

La solution visqueuse est alors placée sur un plateau séchant en verre porté à 90°C. Elle est séchée jusqu'à l'obtention d'un produit dur et sec qui se craquelle. Ce produit est ensuite fractionné puis réduit sous forme d'une poudre blanche fine, par broyage dans un mortier. Cette poudre présente une granulométrie inférieure à 100 micromètres.

La poudre obtenue est ensuite remise à l'étuve aux environs de 90°C, pendant 2 à 3 heures, pour éliminer la majeure partie d'eau résiduelle provenant en particulier de l'atmosphère ambiante au cours de l'étape de broyage et de tamisage. La poudre ainsi séchée peut alors être dissoute directement dans un grand nombre de solvants organiques généralement polaires, à une température inférieure à 90°C, afin de former des colloïdes, sols et même des gels, de concentration voulue par simple pesage de la poudre et du (ou des) solvant(s).

Dans les mêmes conditions opératoires que ci-dessus, on a obtenu une poudre de Nafion$^{(R)}$ de masse équivalente 1200 en partant d'une membrane de Nafion$^{(R)}$ 120 provenant de chez Dupont de Nemours, vendue sous forme acide et réalisé des colloïdes (gels) comparables.

La possibilité de mettre en solution de façon homogène de telles poudres semble assez directement liée à une différence structurale existant entre le polymère de départ et la poudre obtenue selon le procédé de l'invention. La mise en évidence s'effectue par des mesures de diffusion de neutrons (ou de rayons X) aux petits angles, comme représenté sur les figures 3a et 3b.

En effet, le matériau industriel de départ disponible sur le marché, qu'il se trouve sous forme de membrane, commercialisée principalement par Dupont de Nemours, ou sous forme de petites billes appelées poudre par les fabricants mais qui font moins de 100 mesh, c'est-à-dire plus de 150 µm, présente un pic de Bragg B dans la région des petits angles (ou des petits transferts de moment Q - partie la plus à gauche des figures 3a et 3b). Ce pic B résulte de la présence de cristallites lamellaires, noyés au sein d'une matrice amorphe, relativement bien ordonnés et présentant une distance de répétition de l'ordre de 160 nm (figure 3a).

La poudre obtenue selon le procédé de l'invention ne fait apparaître aucun signal dans ce domaine des petits Q ; le large pic de diffraction a totalement disparu ainsi que le montre la figure 3b. Ceci prouve la disparition de l'ordre interlamellaire dans le cas de la poudre de l'invention et permet d'avancer une explication satisfaisante à sa solubilité dans un solvant polaire.

Cet ordre présent dans le matériau de départ résulte probablement de réticulations par l'intermédiaire de mêmes chaînes de polymères entre les cristallites lamellaires qui sont ainsi liés les uns aux autres. Ces réticulations sont cassées par les phases successives au cours de la préparation de la poudre selon l'invention et en particulier très vraisemblablement au cours de l'étape de broyage. C'est la destruction de cet édifice cristallin qui libère en grande partie les cristallites lamellaires et conduit sans doute ainsi au phénomène de dissolution de la poudre.

Il faut ajouter qu'il existe sur le marché des poudres de ces matériaux commercialisées par Dupont de Nemours, Aldrich S.A. et Solution Technology Inc (Mendenhall, PA 19357, USA), dont on peut affirmer qu'elles sont obtenues d'une manière autre que la poudre de l'invention. En effet, ces poudres ne se "dissolvent" que dans les mêmes conditions et avec les mêmes résultats que la membrane polymérique de départ, conditions décrites précédemment. Plongées à faible température (<100°C) dans un solvant polaire, ces poudres gonflent mais par évaporation redonnent une poudre morphologiquement identique à celle de départ (pas d'agglomération ou formation de films). De plus ces poudres relativement grosses ne peuvent être fractionnées en particules plus petites par broyage dans un mortier à température ambiante, ce qui n'est pas le cas dans l'invention. Enfin comme cela ressort des diagrammes de diffusion aux petits angles, il ne s'agit que du matériau de départ ayant subi une simple fragmentation et non d'une poudre obtenue au cours du procédé selon l'invention.

B) - Dissolution d'une poudre de Nafion$^{(R)}$ de masse équivalente 1100 dans différents solvants polaires organiques.

EXEMPLES 1 à 21

Les exemples sont regroupés dans trois tableaux selon que les solvants de la poudre de Nafion$^{(R)}$ 117 obtenue selon le procédé de l'invention sont dipolaires aprotiques (tableau I), dipolaires protiques (tableau II) ou

apolaires aprotiques (tableau III). Les exemples qui y sont regroupés correspondent au protocole de fabrication des colloïdes suivant :

Un poids x de poudre pratiquement anhydre de Nafion(R) 117 obtenue selon l'étape A est mélangé à une quantité y de solvant. La pâte ainsi formée est homogénéisée avec une spatule d'abord à la température ambiante, puis à 90°C quand cela est nécéssaire. On obtient un colloïde homogène, un gel dans la grande majorité des exemples, limpide, transparent et incolore.

La lecture des tableaux se poursuit, après la définition de x et de y avec le nom usuel des solvants dont la formule chimique et le nom selon la nomenclature en vigueur ont été pour nombre d'entre eux indiqués précédemment, avec l'indication du cation associé à la poudre de Nafion(R) la température d'ébullition $\theta_E$ (°C) du solvant à pression atmosphérique (* exception 740 mm de mercure soit $9{,}9.10^4$ Pa pour le CEG), la concentration en poids de Nafion(R) C (%) du colloïde obtenu, son aspect à température ambiante (état pratiquement toujours gel selon notre définition) et sa thermoréversibilité, la conductivité ionique Ci du colloïde obtenu mesurée à température ambiante et enfin quelques types de dispositifs électrochimiques (tableau I uniquement) auxquels s'appliquent les matériaux obtenus selon le procédé de l'invention.

TABLEAU I - Solvants dipolaires aprotiques

| EX | Solvants | Poudre de Nafion® 117 x(g) | Poudre de Nafion® 117 cation | solvants y(g) | solvants $\theta_E$(°C) | Colloïdes C(%) | Colloïdes Aspect du colloïde à 20°C | Ci à 20°C ($\Omega^{-1}cm^{-1}$) | Applications électrochimiques à température ambiante |
|---|---|---|---|---|---|---|---|---|---|
| 1 | acétonitrile | 1,8354 | $Li^+$ | 2,2645 | 82 | 44,8 | gel thermoréversible | $3,4x10^{-3}$ | Electrolytes pour :<br>- batteries au lithium,<br>- cellules d'affichage transparentes avec leur extension aux vitrages solaires à transmission variable. |
| 2 | DMSO | 1,5715 | $Li^+$ | 2,1210 | 189 | 42,6 | " | $2,7x10^{-3}$ | |
| 3 | DMSO | 1,5916 | $Na^+$ | 2,1232 | 189 | 42,8 | sol à la limite du gel | $2,2-2,7x10^{-3}$ | |
| 4 | CP | 2,3778 | $Li^+$ | 4,9045 | 240 | 32,6 | gel thermoréversible | $5,1-4,4x10^{-3}$ | |
| 5 | CP | 2,1919 | $Na^+$ | 4,3164 | 240 | 33,7 | " | $8,3-7x10^{-4}$ | |
| 6 | CP | 1,7557 | $Rb^+$ | 3,2496 | 240 | 35,1 | " | $1,2x10^{-3}$ | |
| 7 | CEG | 1,5134 | $Li^+$ | 4,8576 | 243* | 23,8 | sol à la limite du gel | $8x10^{-3}$ | |
| 8 | CEG | 4,8460 | $Li^+$ | 11,5331 | 243* | 29,6 | gel thermoréversible | $4x10^{-3}$ | |
| 9 | Sulfolane | 1,3952 | $Li^+$ | 3,2775 | 287 | 29,9 | " | $6,1x10^{-4}$ | |
| 10 | Sulfolane | 1,9702 | $Na^+$ | 4,7276 | 287 | 29,4 | " | $3,4x10^{-4}$ | |
| 11 | DMF | 1,7798 | $Li^+$ | 3,0851 | 153 | 36,6 | " | $5,3x10^{-3}$ | |
| 12 | DMA | 2,0361 | $Li^+$ | 2,9845 | 165 | 40,6 | " | $5x10^{-3}$ | |
| 13 | NMF | 1,9368 | $Li^+$ | 2,2132 | 182 | 46,7 | " | $5-5,8x10^{-3}$ | |
| 14 | acétamide | 1,2539 | $Li^+$ | 1,8505 | 221 | 40 | gel au-dessus de 80°C | $5x10^{-3}$(80°C) | |
| 15 | mélange acétonitrile + CP | 4,2132 | $Li^+$ | 2,2645<br>4,9045 | 82<br>240 | 37 | Gel thermoréversible | $4x10^{-3}$ | |

CP = carbonate de propylène
DMSO = diméthylsulfoxyde
DMF = N,N-diméthylformamide
DMA = N,N-diméthylacétamide
NMF = N-méthyl Formamide
CEG = carbonate d'éthylène

TABLEAU II - Solvants dipolaires protiques

| EX | Solvants | Poudre de Nafion(R) 117 | | Solvants | | Colloïdes | | Applications |
|---|---|---|---|---|---|---|---|---|
| | | x(g) | cation | y(g) | $\theta_E$(°C) | C(%) | Aspect du colloïde à 20°C | |
| 16 | 2-éthoxy-éthanol | 1,2240 | $Li^+$ | 5,2618 | 136 | 18,9 | gel très élastique non thermoréversible | Dispositifs électrochimiques et matériaux de base à coûts avantageux (voir texte) |
| 17 | éthylène glycol | 1,3015 | $Li^+$ | 2,0987 | 197 | 38 | gel thermoréversible | |
| 18 | diéthylène glycol | 1,3832 | $Li^+$ | 1,9917 | 245 | 41 | " | |
| 19 | glycérol | 1,3528 | $Li^+$ | 2,0082 | 290 | 40 | " | |

Les conductivités cationiques Ci à 20°C des gels qui figurent sur ce tableau sont du même ordre de grandeur que celles données dans le tableau I.

TABLEAU III - Solvants apolaires aprotiques

| EX | Solvants | Poudre de Nafion(R) 117 | | solvants | | Colloïdes | | Ci à 20°C | Applications électrochimiques à température ambiante |
|---|---|---|---|---|---|---|---|---|---|
| | | x(g) | cation | y(g) | $\theta_E$(°C) | C(%) | Aspect du colloïde à 20°C | ($\Omega^{-1}cm^{-1}$) | |
| 20 | TEP | 1,8915 | $Li^+$ | 6,7204 | 215 | 22 | gel très élastique non thermoréversible | $1 \times 10^{-4}$ | Idem Tableau I |
| 21 | TBP | 2,0153 | $Li^+$ | 7,8154 | 289 | 20,5 | " | $1.10^{-4}$ | |

TEP - triéthylphosphate
TBP - tributylphosphate

EXEMPLE 22

Comme dans les exemples ci-dessus, on a mélangé de la poudre de Nafion(R) 117 échangé $Li^+$ avec de la NMA ($\theta_E$ = 221°C et constante diélectrique 179) dans des proportions variables allant de 25 à 35% d'ionomère avec formation de gels thermoréversibles de conductivité ionique élevée. Ces gels peuvent avantageusement être utilisés dans des dispositifs électrochimiques au lithium fonctionnant à température ambiante.

La fabrication des colloïdes décrite dans les exemples précédents conduit pour les très fortes concentrations à des gels ayant des caractéristiques bien précises et reproductibles, la conductivité cationique en particulier, ce qui est impossible à partir de l'art antérieur connu et rend indispensable le passage par le stade de la poudre selon le procédé de l'invention.

Parallèlement aux exemples 1 à 22 ci-dessus, les inventeurs ont effectué pour les différents solvants donnés en exemple, une mise en solution directe, notamment à reflux, d'une membrane de Nafion(R) 117. Cette mise en solution est laborieuse voire impossible et les produits obtenus sont fortement colorés, ce qui correspond à une dégradation chimique de la membrane et ceci empêche toute utilisation dans des générateurs électrochimiques.

Ce point capital pour les exemples 1 à 15 (les solvants dipolaires aprotiques), l'est également pour les exemples 16 à 19 même si le domaine d'application dans des dispositifs électrochimiques semble plus limité. Pour les colloïdes et bien sûr gels des exemples 16 à 19, avec des solvants dipolaires protiques, une autre utilisation nécessitant également leur parfaite caractérisation est celle de produits de base présentant toute la souplesse des solutions, quoique beaucoup plus concentrées (d'un facteur 5 à 10, voire plus) et avec donc tous les avantages induits de cet état dans une optique commerciale (conditionnement, encombrement plus faible, quantité moindre de solvants, de surcroît peu onéreux, comme ceux des exemples 17 et 19, etc.).

Les utilisations peuvent être celles déjà connues avec le Nafion(R) 117 pour la catalyse, pour des synthèses chimiques où leur activité liée à l'état colloïdal, gel en particulier, qui peut être avantageuse, pour l'introduction dans divers substrats poreux à l'intérieur desquels le gel peut se reformer soit pour y rester soit pour y sécher.

Sans protection étanche du système, malgré la très faible volatilité à température ambiante de la plupart des solvants exemplifiés (exemples 2 à 10, 14 et 15, puis 17 à 19) le processus de concentration-séchage bien qu'énormément ralenti par rapport aux mélanges eau/alcool est inéluctable ainsi que les modifications de propriétés du gel, la conductivité en particulier. Le gain est toutefois considérable par rapport à l'art antérieur connu et offre ainsi de nouvelles possibilités.

EXEMPLE 23

On prépare selon un procédé similaire au protocole décrit en A, une solution de Nafion(R) de masse équivalente 1200. Le produit de départ est une membrane reçue sous forme acide $H^+$, découpée au préalable en petits morceaux de quelques $mm^2$ et on immerge 10 g du produit dans un récipient en pyrex contenant 200 $cm^3$ d'une solution contenant 50% en volume d'eau bidistillée et 50% en volume d'éthanol RP. Le récipient est placé dans un autoclave chauffé pendant 3 heures à 250°C. Le Nafion(R) 1200 est totalement dissous et la solution obtenue est claire et limpide. On concentre la solution par chauffage progressif en étuve jusqu'à 90°C, pour éliminer successivement l'éther formé et une partie de l'alcool résiduel.

Lorsque la solution devient visqueuse, correspondant à une concentration de 15% en poids de Nafion(R), celle-ci est transférée dans un boyau de dialyse cellulosique, dont les pores sont de 2,5 nm de diamètre, fermé à ses extrémités, que l'on immerge dans un récipient de pyrex contenant 250 $cm^3$ d'une solution identique à celle de départ (50%-50% en volume d'eau bidistillée et d'éthanol RP) contenant un large excès de $FeCl_3$, 5 g.

La solution extérieure de chlorure ferrique est homogénéisée en permanence par agitation magnétique, et ce, pendant 3 heures. La solution extérieure au boudin de dialyse est alors remplacée par le même volume d'eau bidistillée, 250 $cm^3$, pendant encore 3 heures. On répète trois fois l'opération jusqu'à élimination totale de l'excès de $FeCl_3$.

Le contenu du boudin de dialyse est ensuite placé dans un récipient en pyrex, la solution de Nafion(R) 1200 dont les protons $H^+$ sont remplacés par des ions $Fe^{3+}$ est alors concentrée et séchée à l'étuve à 90°C. Aux alentours de 20% en poids de Nafion(R) 1200, la solution visqueuse gélifie par refroidissement à l'ambiante. Ce produit est ensuite fractionné, puis broyé en poudre dans un mortier et tamisé de façon à obtenir une poudre de granulométrie inférieure à 100 micromètres.

Une mesure de la capacité d'échange sur 2 g de cette poudre montre que l'échange des protons $H^+$ par des cations $Fe^{3+}$ est total.

On dissout 2,3227 g de cette poudre dans 4,8934 g de carbonate de propylène. L'homogénéisation pendant 1 heure à 90°C conduit à un gel thermoréversible de concentration 32,2% en poids de Nafion(R) 1200.

## Revendications

1. Procédé de fabrication d'un colloïde d'au moins un ionomère perfluoré conducteur cationique, caractérisé en ce qu'il comprend les étapes suivantes :

- mise en solution d'au plus 15% en poids de l'ionomère dans un mélange eau/alcool à une température allant de 210°C jusqu'à moins de 300°C et en autoclave, cet ionomère ayant une masse équivalente inférieure à 1500 et l'alcool ayant jusqu'à 10 atomes de carbone,
- concentration et séchage de la solution à température au plus égale à 100°C,
- broyage du produit obtenu pour former une poudre fine, et
- dissolution et homogénéisation de cette poudre dans un solvant contenant au moins un solvant organique, à température au plus égale à 100°C.

2. Procédé de fabrication selon la revendication 1, caractérisé en ce que le groupement échangeur de cations de l'ionomère est un groupement $-SO_3M$ ou $-CO_2M$ dans lequel M est un cation simple ou complexe.

3. Procédé de fabrication selon la revendication 2, caractérisé en ce que le cation M est simple et choisi dans le groupe formé de l'hydrogène, des alcalins, des alcalino terreux, du cuivre, du fer, du cobalt, de l'aluminium, des lanthanides, de l'uranium et du thorium.

4. Procédé de fabrication selon la revendication 2, caractérisé en ce que le cation M est complexe et choisi dans le groupe des composés organiques et organométalliques.

5. Procédé de fabrication selon l'une quelconque des revendications 1 à 4, caractérisé en ce que la mise en solution est effectuée à une température allant de 210 à 250°C pendant 2 à 3 heures.

6. Procédé de fabrication selon l'une quelconque des revendications 1 à 5, caractérisé en ce que le mélange eau/alcool contient en volume 50% d'eau et 50% d'alcool.

7. Procédé de fabrication selon l'une quelconque des revendications 1 à 6, caractérisé en ce que la concentration et le séchage sont effectués progressivement à une température au plus égale à 100°C.

8. Procédé de fabrication selon l'une quelconque des revendications 1 à 6, d'un colloïde d'un ionomère perfluoré conducteur cationique dont le cation est un cation métallique complexe organique ou complexe organo-métallique, caractérisé en ce que la concentration et le séchage sont accompagnés d'une dialyse.

9. Procédé de fabrication selon l'une quelconque des revendications 1 à 8, caractérisé en ce que la poudre présente une granulométrie inférieure à 32 micromètres.

10. Procédé de fabrication selon l'une quelconque des revendications 1 à 9, caractérisé en ce que l'ionomère représente jusqu'à 60% en poids du colloïde.

11. Procédé de fabrication selon l'une quelconque des revendications 1 à 10, caractérisé en ce que le solvant présente une constante diélectique supérieure à 30.

12. Procédé de fabrication selon l'une quelconque des revendications 1 à 10, caractérisé en ce que le solvant organique est choisi parmi un solvant dipolaire, le triéthylphosphate et le tributylphosphate.

13. Procédé de fabrication selon l'une quelconque des revendications 1 à 11, caractérisé en ce que le solvant organique est un solvant dipolaire protique.

14. Procédé de fabrication selon la revendication 1, caractérisé en ce que le solvant organique est choisi dans le groupe formé de l'acétonitrile, le diméthylsulfoxide, le carbonate de propylène, le carbonate d'éthylène glycol, le tétraméthylène sulfone, le N-N-diméthylformamide, le N-N- diméthylacétamide, l'acétamide, le triéthylphosphate, le tributylphosphate.

15. Procédé de fabrication selon la revendication 13, caractérisé en ce que le solvant organique est choisi dans le groupe formé du 2-éthoxyéthanol, de l'éthylène glycol, du diéthylène glycol, du glycérol.

16. Procédé de fabrication selon l'une quelconque des revendications 1 à 15, caractérisé en ce qu'on sèche la poudre sous vide à une température inférieure à 100°C.

17. Procédé selon l'une quelconque des revendications 11 à 15, caractérisé en ce que le solvant contient de l'eau.

18. Cellule électrochimique comportant un récipient étanche renfermant un électrolyte (2, 26) une première (3, 5, 23) et une seconde (7, 9, 25) électrodes en contact avec l'électrolyte (2, 26), caractérisée en ce que l'électrolyte est un colloïde obtenu par le procédé selon l'une quelconque des revendications 1 à 17.

## Ansprüche

1. Verfahren zum Herstellen eines Kolloids aus wenigstens einem ionomeren, perfluorierten, kationischen Leiter, dadurch gekennzeichnet, daß es folgende Verfahrensschritte umfaßt :

- In-Lösung-Bringen von höchstens 15 Gewichtsprozent des lonomers in eine Mischung aus Wasser/Alkohol bei einer Temperatur von 210°C bis wenigstens 300°C und in einem Autoklav, wobei dieses lonomer

eine Äquivalenzmasse kleiner als 1500 besitzt und der Alkohol bis zu 10 Kohlenstoffatome besitzt,

- Konzentration und Trocknung der Lösung bei einer Temperatur von höchstens 100°C,
- Mahlen des erhaltenen Produkts zum Bilden eines feinen Pulvers, und
- Auflösen und Homogenisieren dieses Pulvers in einem Lösungsmittel, das wenigstens ein organisches Lösungsmittel enthält, bei einer Temperatur von höchstens 100°C.

2. Herstellungsverfahren nach Anspruch 1, dadurch gekennzeichnet, daß die Kationentauschergruppe des Ionomers eine $-SO_3M$ - oder $-CO_2M$ -Gruppe ist, in der M ein einfaches oder komplexes Kation ist.

3. Herstellungsverfahren nach Anspruch 2, dadurch gekennzeichnet, daß das Kation M einfach Ist und aus der Gruppe ausgewählt wird, die gebildet wird von dem Wasserstoff, den Alkalielementen, den Erdalkallelementen, dem Kupfer, dem Elsen, dem Kobalt, dem Aluminium, den Lanthaniden, dem Uran und dem Thorium.

4. Herstellungsverfahren nach Anspruch 2, dadurch gekennzeichnet, daß das Kation M komplex ist und aus der Gruppe der organischen und organometallischen Verbindungen ausgewählt wird.

5. Herstellungsverfahren nach einem der Ansprüche 1 bis 4, dadurch gekennzeichnet, daß das In-Lösung-Bringen bei einer Temperatur von 210°C bis 250°C während einer Dauer von 2 bis 3 Stunden durchgeführt wird.

6. Herstellungsverfahren nach einem der Ansprüche 1 bis 5, dadurch gekennzeichnet, daß die Mischung Alkohol/Wasser volumenmäßig 50% Wasser und 50% Alkohol enthält.

7. Herstellungsverfahren nach einem der Ansprüche 1 bis 6, dadurch gekennzeichnet, daß die Konzentration und Trocknung schrittweise bei einer Temperatur von höchstens 100°C durchgeführt werden.

8. Herstellungsverfahren nach einem der Ansprüche 1 bis 6 eines Kolloids aus einem ionomeren, perfluorierten, kationischen Leiter, dessen Kation ein organisches oder ein organo-metallisches komplexes Metallkation ist, dadurch gekennzeichnet, daß die Konzentration und Trocknung von einer Dialyse begleitet werden.

9. Herstellungsverfahren nach einem der Ansprüche 1 bis 8, dadurch gekennzeichnet, daß das Pulver einer Körnung geringer als 32 Mikrometer aufweist.

10. Herstellungsverfahren nach einem der Ansprüche 1 bis 9, dadurch gekennzeichnet, daß das Ionomer bis 60 Gewichtsprozent des Kolloids ausmacht.

11. Herstellungsverfahren nach einem der Ansprüche 1 bis 10, dadurch gekennzeichnet, daß das Lösungsmittel eine Dielektrizitätskonstante größer als 30 aufweist.

12. Herstellungsverfahren nach einem der Ansprüche 1 bis 10, dadurch gekennzeichnet, daß das organische Lösungsmittel ausgewählt wird aus einem dipolaren Lösungsmittel, dem Triäthylphosphat und dem Tributylphosphat.

13. Herstellungsverfahren nach einem der Ansprüche 1 bis 11, dadurch gekennzeichnet, daß das organische Lösungsmittel ein protonisches, dipolares Lösungsmittel ist.

14. Herstellungsverfahren nach Anspruch 1, dadurch gekennzeichnet, daß das organische Lösungsmittel ausgewählt aus der Gruppe, die gebildet wird von den Azetonnitrid, dem Dimethylsulfoxyd, dem Propylenkarbonat, dem Äthylenglykolkarbonat, dem Tetramethylensulfon, dem N-N- Dimethylformamid, dem N-N-Dimethylazetamid, dem Azetamid, dem Triäthylphosphat, dem Tributylphosphat.

15. Herstellungsverfahren nach Anspruch 13, dadurch gekennzeichnet, daß das organische Lösungsmittel ausgewählt wird aus der Gruppe, die gebildet wird von dem 2-Äthoxyäthanol, den Äthylenglykol, dem Diäthylenglykol, dem Glyzerol.

16. Herstellungsverfahren nach einem der Ansprüche 1 bis 15, dadurch gekennzeichnet, daß man das Pulver unter Vakuum bei einer Temperatur unter 100°C trocknet.

17. Herstellungsverfahren nach einem der Ansprüche 11 bis 15, dadurch gekennzeichnet, daß das Lösungsmittel Wasser enthält.

18. Elektrochemische Zelle mit einem dichten Kolben, der einen Elektrolyten (2, 26) und eine erste (3, 5, 23) und eine zweite (7, 9, 25) Elektrode in Kontakt mit dem Elektrolyten (2, 26) umfaßt, dadurch gekennzeichnet, daß der Elektrolyt ein Kolloid ist, das nach dem Verfahren nach einem der Ansprüche 1 bis 17 erhalten wird.

## Claims

1. Process for the production of a colloid of at least one cationic conducting perfluoric ionomer, characterized in that it comprises the stages of dissolving at the most 15% by weight of the ionomer in a water-alcohol mixture at a temperature from 210°C to below 300°C and in the autoclave, said ionomer having an equivalent mass below 1500 and the alcohol having up to 10 carbon atoms, concentration and drying the solution at a temperature at the most equal to 100°C, grinding the product obtained to form a fine powder and dissolving and homogenizing said powder in a solvent containing at least one organic solvent at a temperature at the most equal to 100°C.

FIG. 1

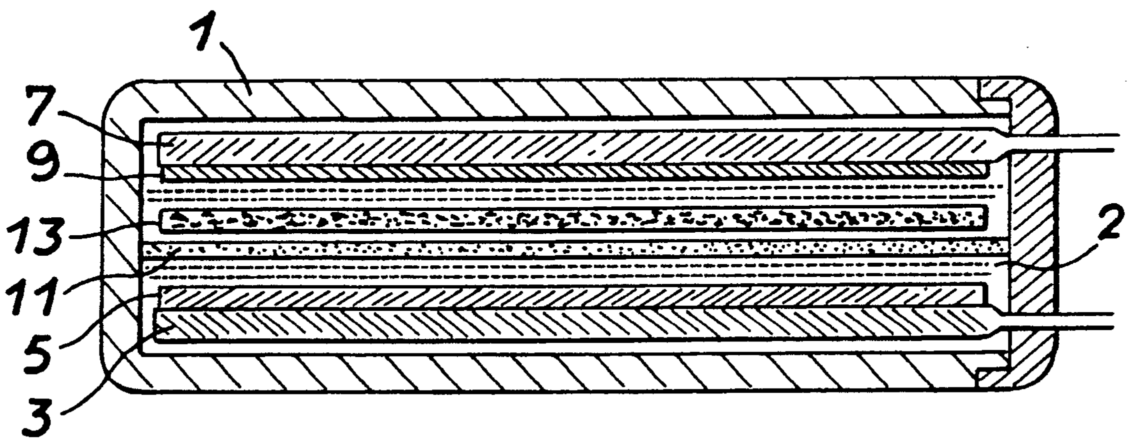


FIG. 2

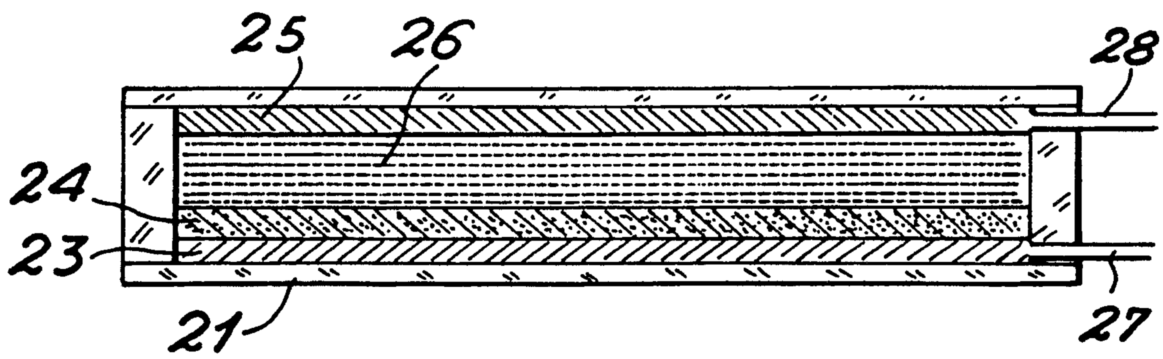

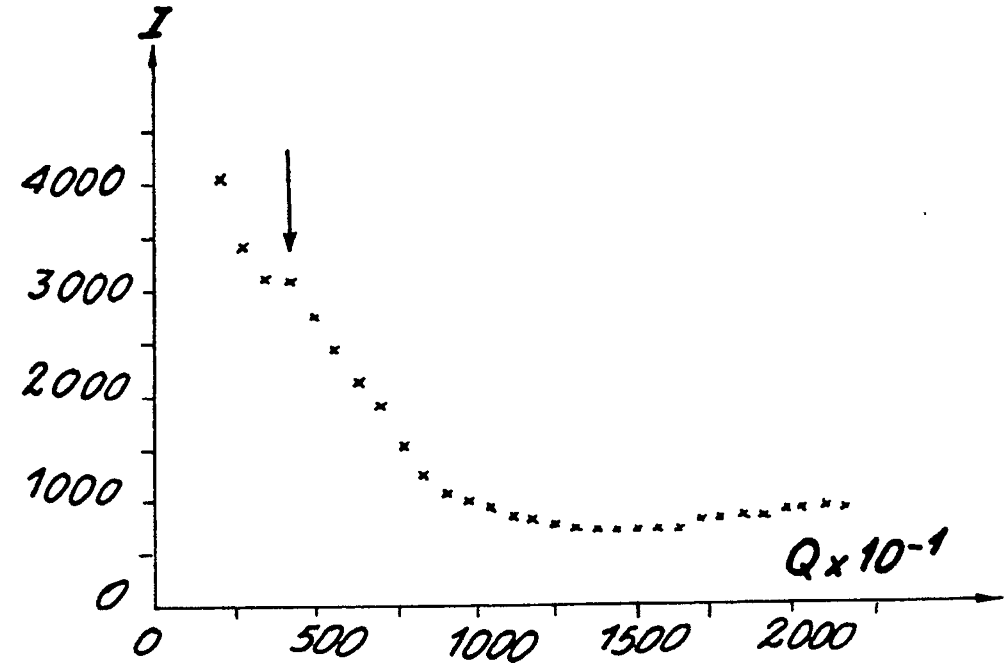
I
4000
3000
2000
1000
0
0
500
1000
1500
2000
Q x 10⁻¹

FIG. 3a

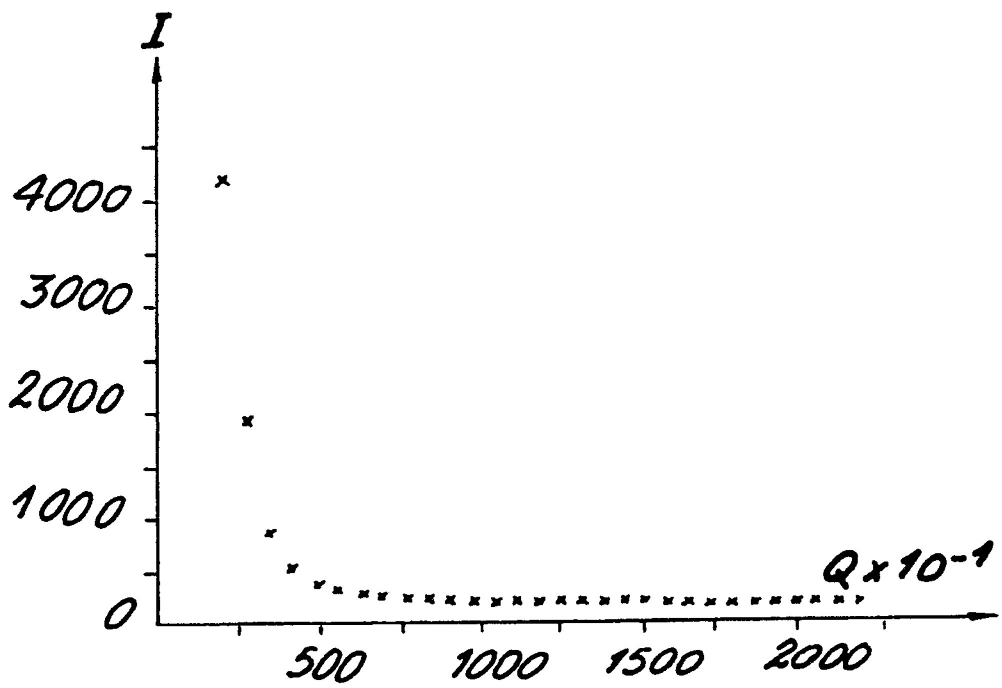
I
4000
3000
2000
1000
0
500
1000
1500
2000
Q x 10⁻¹

FIG. 3b